# EUROPÄISCHE PATENTSCHRIFT

(11) **EP 3 895 965 B1**
(45) Veröffentlichungstag und Bekanntmachung des Hinweises auf die Patenterteilung: **10.07.2024**
(21) Anmeldenummer: 21167001.3
(22) Anmeldetag: 06.04.2021
(51) Int. Cl.: B62K 21/26

(54) **FAHRRADGRIFF**
BICYCLE HANDLE GRIP
POIGNÉE DE VÉLO

(30) Priorität: 14.04.2020 DE 202020102041 U
(43) Veröffentlichungstag der Anmeldung: 20.10.2021
(73) Patentinhaber: Ergon International GmbH, 56070 Koblenz (DE)
(72) Erfinder: Krause, Andreas, 56068 Koblenz (DE)
(74) Vertreter: dompatent von Kreisler Selting Werner - Partnerschaft von Patent- und Rechtsanwälten mbB

(56) Entgegenhaltungen:
- JP-A- 2013 039 856
- TW-A- 200 902 374
- TW-A- 201 034 901
- US-B2- 9 061 728

## Beschreibung

Die Erfindung betrifft einen Fahrradgriff, der insbesondere für Trekkingräder, Mountainbikes und dergleichen geeignet ist.

Aus WO 2005/021366 sind Fahrradgriffe bekannt, die eine innere zylindrische Hülse aufweisen. Die Hülse weist einen kreisrunden Querschnitt auf, wobei der Innendurchmesser dem Außendurchmesser des Lenkers entspricht, sodass zur Montage die Hülse unmittelbar auf den Lenker aufgesteckt wird. Die Hülse weist einen flügelförmigen Ansatz auf. Dieser weist in montiertem Zustand in Richtung des Benutzers. Sowohl die Hülse als auch der flügelförmige Ansatz sind von einem aus einem weicheren Material hergestellten Griffelement umgeben. Hierdurch ist in dem zylindrischen Bereich ein Griffteil ausgebildet, der ebenfalls zylindrisch ist. Der zylindrische Bereich ist in montiertem Zustand der innere, d.h. in Richtung des Lenkervorbaus weisende Bereich des Griffs. In dem äußeren Bereich, in dem der flügelförmige Ansatz der Hülse vorgesehen ist, ist durch das den Flügel umgebende Griffelement ein Handballen-Abstützelement ausgebildet. Hierdurch erfolgt insbesondere bei längeren Fahrten ein gutes Abstützen des Fahrergewichts. Wenngleich mit einem derartigen Fahrradgriff der Komfort erheblich verbessert ist, kann es bei längeren Belastungen oder aufgrund von Materialhalterungen vorkommen, dass der flügelförmige Ansatz vom Benutzer gespürt wird. WO 2005/021366 offenbart die Merkmale der Präambel des Anspruchs 1.

Aufgabe der Erfindung ist es einen Fahrradgriff, der insbesondere ein Handballen-Abstützelement aufweist, hinsichtlich des Komforts zu verbessern.

Die Lösung der Aufgabe erfolgt erfindungsgemäß durch die Merkmale des Anspruchs 1.

Der erfindungsgemäße Fahrradgriff, der insbesondere für Trekkingräder, Mountainbikes und dergleichen geeignet ist, weist eine Hülse auf. Diese weist vorzugsweise eine runde Öffnung auf, wobei der Durchmesser dieser Öffnung dem Außendurchmesser des Lenkers entspricht, sodass die Hülse in montiertem, d.h. in auf den Lenker aufgesteckten Zustand unmittelbar am Lenker anliegt. Vorzugsweise weist die Hülse eine dem Fahrradgriff im Wesentlichen entsprechende Länge auf. Gegebenenfalls kann die Hülse eine Länge aufweisen, die sich um 1 cm bis 2 cm von der Länge des Fahrradgriffs unterscheidet.

Mit der Hülse ist ein flügelförmiges Ansatzelement verbunden. Das Ansatzelement ist vorzugsweise aus demselben Material wie die Hülse hergestellt und in besonders bevorzugter Ausführungsform einstückig mit der Hülse ausgebildet. Das flügelförmige Ansatzelement ist bei montiertem Fahrradgriff vorzugsweise in einem äußeren und/oder mittigen Bereich der Hülse angeordnet. Vorzugsweise erstreckt sich das Ansatzelement ausgehend von einer in montiertem Zustand äußeren Seite der Hülse, mindestens bis zur Mitte der Hülse, insbesondere über eine Länge von mehr als 50% insbesondere mehr als 70% der Hülse. Des Weiteren ist es bevorzugt, dass sich das flügelförmige Ansatzelement nicht bis zum in montiertem Zustand inneren Bereich der Hülse erstreckt. Vielmehr sind vorzugsweise 20% bis 50% der Länge der Hülse im inneren Bereich zylindrisch ausgebildet.

In montiertem Zustand weist das Ansatzelement in Richtung des Benutzers bzw. entgegen einer Fahrtrichtung. Ferner ist das Ansatzelement in montiertem Zustand vorzugsweise im Wesentlichen horizontal ausgerichtet. Insbesondere ist eine durch das Griffelement ausgebildete Oberseite im Bereich des Ansatzelements horizontal ausgerichtet.

Unabhängig von der Ausgestaltung des Ansatzelements ist der erfindungsgemäße Fahrradgriff derart ausgebildet, dass die Hülse und das Ansatzelement von einem Griffelement umgeben ist. Somit ist zumindest durch das Ansatzelement und das im Bereich des Ansatzelements angeordneten Griffelements ein Handballen-Abstützelement ausgebildet. Zur erfindungsgemäßen Verbesserung des Komforts weist das Griffelement zumindest zwei unterschiedliche Materialien auf. Es ist hierdurch in besonders bevorzugter Ausführungsform möglich, im Bereich des Handballen-Abstützelements unterschiedliche Materialien vorzusehen. Diese können mehrlagig angeordnet sein, sodass beispielsweise in montiertem Zustand oberhalb des flügelförmigen Ansatzelements mehrere Lagen aus unterschiedlichem Material angeordnet sind. Hierdurch kann der Komfort erheblich verbessert werden. Vorzugsweise sind die mindestens zwei im Bereich des flügelförmigen Ansatzes vorgesehenen Materialien, die das Handballen-Abstützelement ausbilden, aus Kunststoffmaterial hergestellt oder weisen zumindest im Wesentlichen Kunststoffmaterial auf.

In besonders bevorzugter Ausführungsform weist das Griffelement ein erstes Material auf, das das Ansatzelement zumindest an einer in montiertem Zustand nach oben weisenden Seite bedeckt. Vorzugsweise ist das Ansatzelement von dem ersten Material umschlossen, sodass das flügelförmige Ansatzelement vollständig innerhalb des ersten Materials angeordnet ist. Hierdurch kann eine gute Verbindung zwischen diesem ersten Material und dem Ansatzelement realisiert werden. Insbesondere ein Abreißen an Kanten oder dergleichen ist vermieden. Auch ist eine in montiertem Zustand in Richtung des Benutzers weisende Vorderkante des Abstützelements somit in dieser bevorzugten Ausführungsform von dem ersten Material umgeben, bzw. umschlossen. Dies führt insbesondere dazu, dass diese Kante vom Benutzer, insbesondere auch bei langen Fahrten, nicht oder zumindest weniger gespürt wird.

In einer bevorzugten Weiterbildung dieser Ausführungsform bedeckt das erste Material ferner auch die Hülse zumindest teilweise. Vorzugsweise bedeckt das erste Material die Hülse in montiertem Zustand zumindest in einem nach oben, sowie in Fahrtrichtung weisenden Bereichs. Das erste Material erstreckt sich somit in Umfangsrichtung in bevorzugter Ausführungsform von einem Bereich unterhalb des Ansatzelements, umschließt das Ansatzelement und erstreckt sich bis in einen vorderen, in Fahrtrichtung, weisenden Bereich. In Umfangsrichtung sind vorzugsweise mindestens 150°, insbesondere mindestens 170° der Hülse von dem ersten Material bedeckt, wobei insbesondere das Ansatzelement in das erste Material eingeschlossen ist. Gegebenenfalls ist ein in Umfangsrichtung verlaufender Bereich von 90° bis 180° der Hülse nicht von dem ersten Material bedeckt. Hierbei handelt es sich insbesondere um einen Bereich der Hülse, der nach unten bzw. nach vorne-unten bezogen auf die Fahrtrichtung weist. Vorzugsweise bedeckt das erste Material die Hülse vollständig. Es ist somit insbesondere bevorzugt, dass das erste Material sowohl das Ansatzelement als auch die Hülse vollständig bedeckt. Das Ansatzelement und die Hülse sind somit in dieser bevorzugten Ausführungsform von dem ersten Material insbesondere umspritzt. Insbesondere in Umfangsrichtung ist die Hülse somit vollständig von dem ersten Material bedeckt. Gegebenenfalls ausgenommen kann hiervon ein Randbereich bzw. Klemmbereich der Hülse sein, in dem, wie nachstehend beschrieben, ein Klemmelement zum Fixieren des Fahrradgriffs am Lenker vorgesehen sein kann. Mit Ausnahme dieses Klemmbereichs ist in bevorzugter Ausführungsform die verbleibende Oberfläche der Hülse und des Ansatzelements von dem ersten Material bedeckt.

Erfindungsgemäß bildet das erste Material im Bereich des Ansatzelements eine innere Materiallage aus. Diese bedeckt das gesamte Ansatzelement. Insbesondere ist eine innere Materiallage an der in montiertem Zustand oberen Fläche als auch an der gegenüberliegenden unteren Fläche des Ansatzelements angeordnet und bedeckt ferner eine in Richtung des Benutzers weisende Kante des Ansatzelements.

Erfindungsgemäß ist im Bereich des Ansatzelements die innere Materiallage von einer äußeren Materiallage bedeckt. Insbesondere ist eine derartige äußere Materiallage auf einer Oberseite, d.h. in montiertem Zustand nach oben weisenden Seite des Ansatzelements, bzw. der inneren Materiallage angeordnet. Bevorzugt ist wiederum, dass die äußere Materiallage die innere Materiallage im Bereich des Ansatzelements auch an der in montiertem Zustand nach unten weisenden Unterseite vorgesehen ist. Die äußere Materiallage bedeckt im Bereich des Ansatzelements die innere Materiallage vollständig, sodass auch eine in Richtung des Benutzers weisende Vorderseite der inneren Materiallage von der äußeren Materiallage umgeben ist. Des Weiteren ist es bevorzugt, dass die äußere Materiallage aus einem anderen Material als die innere Materiallage hergestellt ist.

In besonders bevorzugter Ausführungsform ist die Hülse und das Ansatzelement von einer inneren Materiallage, ggf. mit Ausnahme des Klemmbereichs vollständig umgeben, bzw. bedeckt. Im Bereich des Ansatzelements ist in besonders bevorzugter Ausführungsform die zweite Materiallage vorgesehen, die die erste Materiallage im Bereich des Ansatzelements wiederum vollständig bedeckt. Hierdurch kann der Komfort des erfindungsgemäßen Fahrradriffs deutlich verbessert werden.

Das erste Material ist in besonders bevorzugter Ausführungsform zumindest auf einer Oberseite des Ansatzelements angeordnet und weist vorzugsweise eine Dicke von mindestens 2 mm, insbesondere mindestens 4 mm auf. Ferner ist es bevorzugt, dass die Dicke geringer als 6 mm ist. Des Weiteren ist es bevorzugt, dass das erste Material an einer Unterseite des Ansatzelements angeordnet ist, wobei es bevorzugt ist, dass das erste Material an der Oberseite und an der Unterseite angeordnet ist. Auch an der Unterseite ist es bevorzugt, dass das Material eine Dicke von mindestens 2 mm, insbesondere mindestens 4 mm aufweist, wobei es ferner bevorzugt ist, dass die Dicke geringer als 6 mm ist. Des Weiteren ist es bevorzugt, dass das erste Material auch an einer Vorderkante des Ansatzelements, d.h. an der in montiertem Zustand in Richtung des Benutzers weisenden Kante des Ansatzelements angeordnet ist. Auch in diesem Bereich ist es bevorzugt, dass das erste Material eine Dicke von mindestens 2 mm, insbesondere mindestens 4 mm aufweist, wobei es ferner bevorzugt ist, dass die Dicke geringer als 6 mm ist. Insbesondere ist das erste Material an der Oberseite und/oder der Unterseite und/oder der Vorderkante des Ansatzelements in vorstehend definierter, bevorzugter Dicke vorgesehen.

Die zweite Materiallage ist vorzugsweise auf einer Oberseite der ersten Materiallage und/oder einer Unterseite der ersten Materiallage und/oder einer Vorderkante der ersten Materiallage im Bereich des Ansatzelements vorgesehen. Die Dicke der zweiten Materiallage ist vorzugsweise größer 2 mm insbesondere größer 4 mm, wobei es insbesondere bevorzugt ist, dass die Dicke geringer als 5 mm ist. Im Bereich der Vorderkante ist es bevorzugt, dass die Dicke etwas größer ist als im Bereich der Oberseite und/oder der Unterseite des Ansatzelements. Im Bereich der Vorderkante ist die Dicke vorzugsweise mindestens 5 mm, insbesondere 6 mm dick, wobei die Dicke vorzugsweise geringer als 12 mm, insbesondere geringer als 10 mm ist.

Zur weiteren Verbesserung des erfindungsgemäßen Fahrradgriffs ist das Ansatzelement, das insbesondere einstückig mit der Hülse ausgebildet ist, vorzugsweise derart ausgebildet, dass sich das Ansatzelement ausgehend von der Hülse, insbesondere kontinuierlich verjüngt. Das Ansatzelement weist somit im Verbindungsbereich mit der Hülse eine größere Dicke auf als in einem von der Hülse beabstandeten Bereich. Die Dicke des Ansatzelements verjüngt sich somit ausgehend von der Hülse nach außen, bzw. in Richtung des Benutzers in montiertem Zustand. Eine derartige Ausgestaltung des Ansatzelements hat ferner den Vorteil, dass auch bei sehr starken Belastungen wie Schlägen, ein Beschädigen oder Abbrechen des Ansatzelements, insbesondere am Übergangsbereich zur Hülse, vermieden ist. Unabhängig von der Ausgestaltung des Ansatzelements, insbesondere der Querschnittsverjüngung führt das insbesondere vollständige ummanteln, bzw. umspritzen des Ansatzelements mit einem ersten Material zur Verringerung der Gefahr des Beschädigens auch bei Belastungsspitzen.

Die Dicke des Ansatzelements beträgt vorzugsweise 1 mm bis 3 mm und besonders bevorzugt 1,5 mm bis 3 mm. Die Dicke der Hülse liegt in bevorzugter Ausführungsform im Bereich von 0.8 mm bis 2.5 mm.

Gegebenenfalls kann das Ansatzelement mehrteilig ausgebildet sein. Insbesondere können einzelne Ansatzelemente, vorzugsweise nebeneinander, angeordnet sein. Hierbei ist sodann beispielsweise ein Ansatzelement im äußeren Bereich der Hülse und ein weiteres Ansatzelement im mittleren Bereich der Hülse vorgesehen.

Das Ansatzelement, das ein- oder mehrteilig ausgebildet sein kann, verläuft in bevorzugter Ausführungsform nicht in radialer Richtung bezogen auf die zylindrische Hülse. Vielmehr ist es bevorzugt, dass das Ansatzelement oder zumindest einzelne der Ansatzelemente zu einer Radialen einen Winkel aufweisen. Hierbei ist der Winkel einer Mittellinie, zumindest eines der Ansatzelemente zu einer Radialen der Hülse im Bereich von 30° bis 60°, insbesondere 40° bis 50°. Bei einer horizontalen Ausrichtung dieser Radialen, die im Bereich des Übergangs zwischen Hülse und dem mindestens einen Ansatzelement verläuft, ist das mindestens eine Ansatzelement nach unten ausgerichtet. Insbesondere ist das Ansatzelement in montiertem Zustand nach unten ausgerichtet, wobei es weiterhin bevorzugt ist, dass eine Oberseite des Handballenabstützelements im Wesentlichen horizontal ausgerichtet ist.

Sofern mehrere Ansatzelemente vorgesehen sind, ist es bevorzugt, dass diese den gleichen Winkel aufweisen und somit in einer Ebene angeordnet sind.

Vorzugsweise weisen die mindestens zwei Materialien aus der das Griffelement hergestellt ist, eine unterschiedliche Härte auf. Bevorzugt ist es hierbei, dass das zweite Material, das insbesondere nur im Bereich des Ansatzelements vorgesehen ist, weicher als das erste Material ist.

Des Weiteren ist es bevorzugt, dass die Hülse aus einem Material hergestellt ist, das härter als die Materialien des Griffelements ist.

Die Hülse sowie das insbesondere einstückig mit der Hülse ausgebildete Ansatzelement weist in bevorzugter Ausführungsform glasfaserverstärktes Polypropylen und ist insbesondere aus diesem Material hergestellt. Gegebenenfalls kann dieses Element aus Polypropylen hergestellt sein, ohne Glasfaserverstärkung. Besonders bevorzugt ist die Verwendung PP GF15. Die Hülse, sowie das Ansatzelement weisen vorzugsweise eine Härteshore A auf, die Größer ist als die entsprechende Shore A-Härte der Materialien, aus denen das Griffelement hergestellt ist.

Die Hülse bzw. das Hülsenmaterial weist vorzugsweise ein E-Modul von 1500 - 3000 MPa auf.

Das erste Material, das zumindest das Ansatzelement an seiner Oberseite und seiner Unterseide bedeckt, weist vorzugsweise ein TPE (thermoplastisches Elastomer) auf und ist insbesondere aus diesem hergestellt. Dieses Material das insbesondere eine geringere Härte als die Hülse und das Ansatzelement aufweist, weist vorzugsweise eine Shore-A Härte im Bereich von 35 bis 80 und besonders bevorzugt im Bereich von 40 bis 50 auf.

Das zweite Material, das in bevorzugter Ausführungsform im Bereich des Abstützelements, insbesondere auf der Oberseite des Abstützelement bzw. auf der Oberseite des das Abstützelement umgebenden ersten Material angeordnet ist, ist wiederum um etwas weicher ausgestaltet. Es ist besonders bevorzugt, dass das zweite Material TPE aufweist, insbesondere aus TPE hergestellt ist. Die Shore-A Härte dieses Material liegt vorzugsweise im Bereich von 20 bis 35, insbesondere 25 bis 30.

Zur Fixierung des Fahrradgriffs am Lenker ist es besonders bevorzugt, dass die Hülse einen Klemmbereich aufweist. Ein derartiger Klemmbereich in dem insbesondere kein Material des Griffelements vorgesehen ist, kann auf der Außenseite und/oder der Innenseite der Hülse angeordnet sein. Insbesondere handelt es sich um einen sich um den gesamten Umfang der Hülse erstreckenden Bereich. Es ist sodann möglich durch ein, insbesondere schellenartiges die Hülse in diesem Bereich umgebendes Klemmelement, ein klemmendes Fixieren der Hülse und somit des Fahrradgriffs am Lenker zu realisieren. Hierzu ist es ferner bevorzugt, dass die Hülse im Klemmbereich zumindest einen Klemmschlitz aufweist, um eine zuverlässige klemmende Befestigung des Fahrradgriffs am Lenker zu realisieren.

Nachfolgend wird die Erfindung anhand bevorzugter Ausführungsformen unter Bezugnahme auf die anliegenden Zeichnungen näher erläutert.

Es zeigen:
- Figur 1: eine schematische Draufsicht einer bevorzugten Ausführungsform eines erfindungsgemäßen Fahrradgriffs,
- Figur 2: eine der Figur 1 entsprechende Draufsicht des Fahrradgriffs ohne Klemmelement,
- Figur 3: eine schematische Schnittansicht entlang der Linie III-III,
- Figur 4: eine schematische Schnittansicht entlang der Linie IV-IV in Figur 1,
- Figur 5: eine schematische Draufsicht der Hülse zusammen mit dem Ansatzelement,
- Figur 6: eine schematische Seitenansicht in Richtung des Pfeils VI in Figur 5
- Figur 7: eine schematische Draufsicht einer weiteren bevorzugten Ausführungsform eines erfindungsgemäßen Fahrradgriffs,
- Figur 8: eine schematische Schnittansicht entlang der Linie VIII-VIII in Figur 7 und
- Figur 9: eine Schnittansicht entsprechend Figur 8, wobei es sich um eine alternative Ausführungsform der Erfindung handelt.

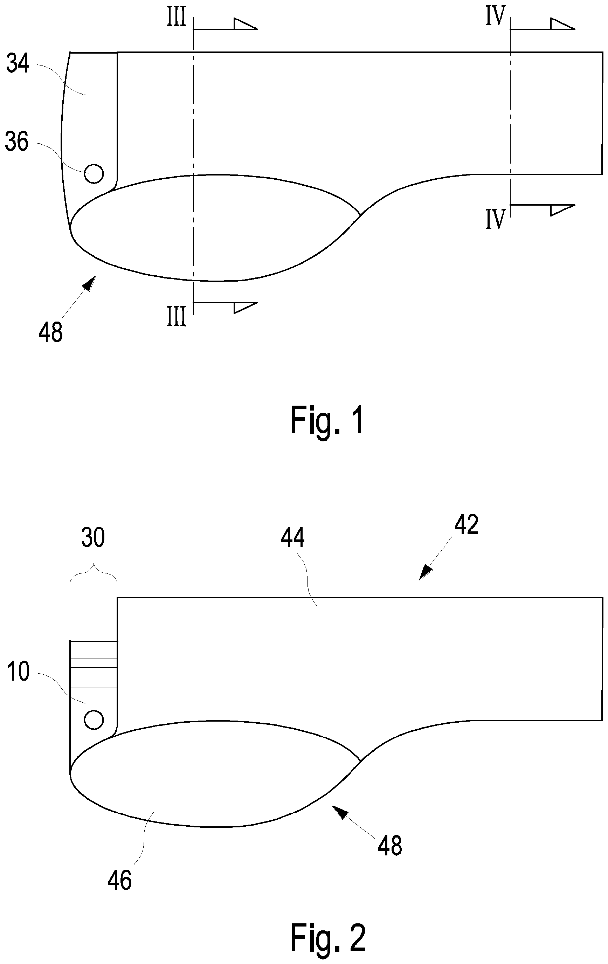

Der erfindungsgemäße Fahrradgriff weist eine Hülse 10 auf. Die Hülse 10 weist eine zylindrische Öffnung 12 auf, wobei der Innendurchmesser der Öffnung 12 einem Außendurchmesser eines Lenkers entspricht. Die Hülse 10 ist im dargestellten Ausführungsbeispiel einstückig mit einem Ansatzelement 14 verbunden, bzw. ausgebildet. Ausgehend von der Hülse 10 erstreckt sich das Ansatzelement in Richtung 16 auf einen Benutzer zu, in montiertem Zustand. Die Dicke des Ansatzes 14 ist in einem Übergangsbereich 18 zwischen der Hülse 10 und dem Ansatzelement 14 dicker als in dem von der Hülse 10 entfernten auf dem Benutzer zuweisenden Bereich 20. Das Ansatzelement verjüngt sich somit insbesondere kontinuierlich, bzw. weist einen konischen Querschnitt auf, wobei die Verjüngung in Richtung 16 des Benutzers erfolgt. Figur 1 zeigt eine Draufsicht eines in montiertem Zustand linken Fahrradgriffs.

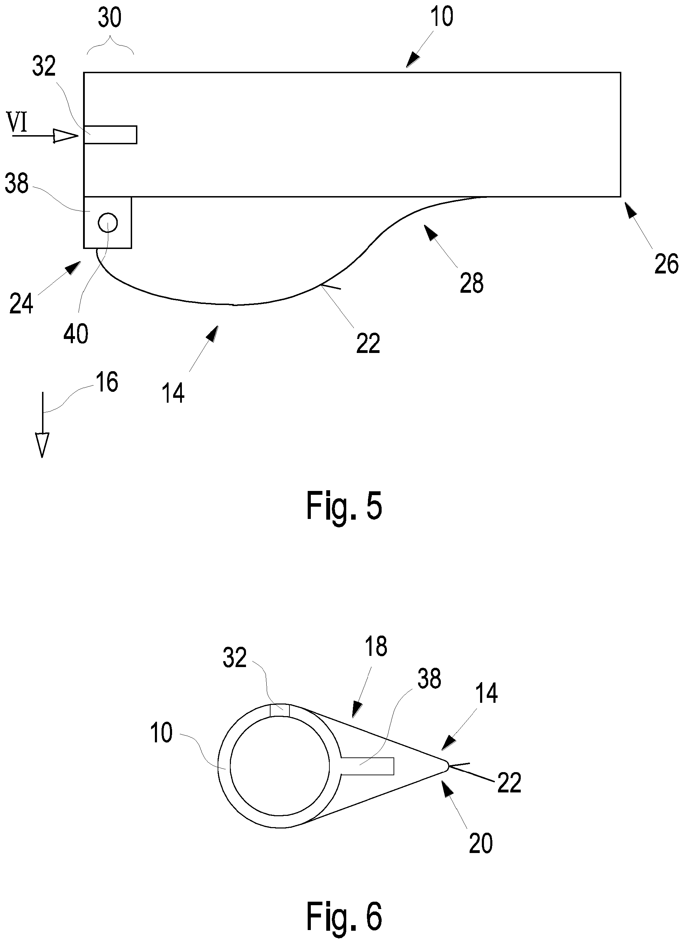

In Draufsicht (Figur 5) weist der flügelförmige Ansatz 14 eine konvex gekrümmte Vorderkante auf, die wiederum in Richtung 16 des Benutzers in montiertem Zustand weist. Ferner erstreckt sich das Ansatzelement 14 ausgehend von einem äußeren Bereich 24 in Richtung eines inneren Bereichs 26 der Hülse 10. Der äußere Bereich 24 ist in montiertem Zustand an der Außenseite des Lenkers angeordnet und der innere Bereich 26 weist in montiertem Zustand in Richtung des Lenkervorbaus bzw. nach innen. Im dargestellten Ausführungsbeispiel erstreckt sich das Ansatzelement um etwas mehr als 50% der Gesamtlänge der Hülse, ausgehend von dem äußeren Bereich 24 bis in einen mittleren Bereich 28.

Des Weiteren weist die Hülse 10 einen Klemmbereich 30 auf. In dem Klemmbereich 30 ist zumindest ein Schlitz 32 angeordnet. Der Klemmbereich 30 dient zur Anordnung eines Klemmmittels 34 (Figur 1). Das Klemmmittel 34 ist schellenartig ausgebildet, wobei in einem mit einem Gewinde versehenen Öffnung 36 ein Klemmmittel zum Zusammenziehen des schellenartigen Klemmelements 34 angeordnet ist. Das Klemmmittel ist durch eine in einem Ansatz 38 (Figur 5) angeordnete Öffnung 40 geführt. Ein derartiger Ansatz kann jedoch auch entfallen. Wenn der Ansatz 38 nicht vorgesehen ist, ist es bevorzugt, dass der flügelförmige Ansatz 14 erst in einem Bereich mit der Hülse 10 verbunden ist, der innerhalb des Klemmbereichs 30 angeordnet ist und vorzugsweise unmittelbar an diesen angrenzt.

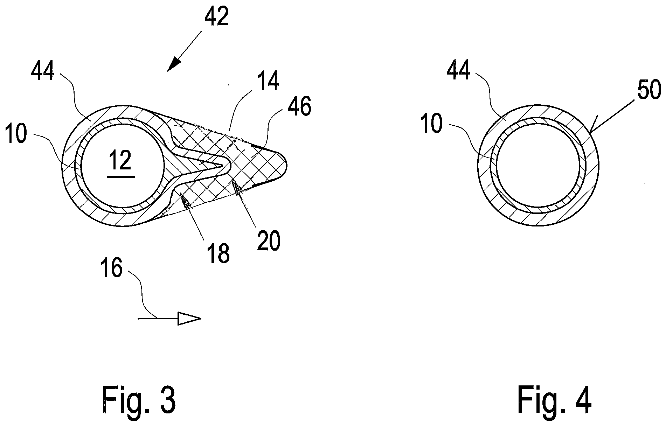

Die Hülse 10 sowie der Ansatz 14 sind von einem Griffelement 42 im dargestellten Ausführungsbespiel mit Ausnahme des Klemmbereichs vollständig umgeben. Das Griffelement 42 besteht im dargestellten Ausführungsbeispiel aus zwei unterschiedlichen Materialien 44, 46. Das erste Material 44 ist unmittelbar auf der Oberseite der Hülse 10, sowie des Ansatzes 14 angeordnet und umgibt mit Ausnahme des Klemmbereichs 30 sowohl die Hülse 10 als auch das Ansatzelement 14 vollständig. Im Bereich des Ansatzelements 14 ist das erste Material 44 etwas dünner ausgebildet, sodass das Ansatzelement 14 von einer durch das zweite Material 46 ausgebildeten zweiten Materiallage bedeckt ist. Diese erstreckt sich wiederum vollständig um den Ansatz 14 bzw. das den Ansatz 14 umgebende erste Material (Figur 3).

Da das Material 46 vorzugsweise weicher ist als das Material 44, kann hierdurch im Bereich des flügelförmigen Ansatzelements 14 ein komfortables weiches Handballen-Abstützelement 48 ausgebildet werden. Aufgrund der im Querschnitt insbesondere sich verjüngenden Ausgestaltung des Ansatzelements 14 und des Vorsehens von zwei Materiallagen 44, 46 im Bereich des Ansatzelements 14 ist ferner eine gute Stabilität auch bei hohen auftretenden Kräften gewährleistet.

Das zweite Material 46 ist nur im Bereich des flügelförmigen Ansatzes 14 vorgesehen. In einem im montierten Zustand in Richtung des Lenkervorbaus bzw. nach innen weisenden Bereich weist der Fahrradgriff im Wesentlichen eine kreiszylindrische Oberseite 50 (Figur 4) auf.

Anstelle des in Figur 1 dargestellten Klemmelements 34 kann auch ein als Haltehorn ausgebildetes Klemmelement vorgesehen sein.

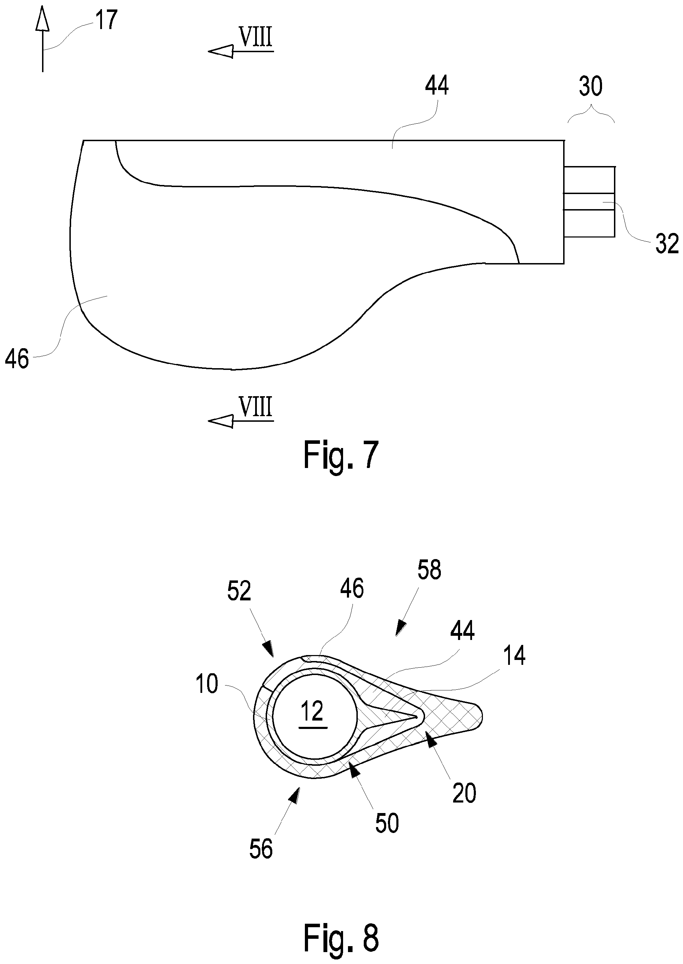

Bei einer weiteren bevorzugten Ausführungsform (Fig. 7 und 8) sind ähnliche und identische Bauteile mit denselben Bezugszeichen gekennzeichnet.

Ein wesentlicher Unterschied der beiden dargestellten Ausführungsformen besteht darin, dass der Klemmbereich 30 bei der in den Figuren 7 und 8 dargestellten Ausführungsform auf der Innenseite und nicht auf der Außenseite des Fahrradgriffs im montierten Zustand angeordnet ist. Gegebenenfalls könnten sowohl im Innenbereich als auch im Außenbereich Klemmelemente vorgesehen sein.

Des Weiteren ist die Ausgestaltung der Lagen der beiden Materialien 44 und 46 etwas anders. Das zweite Material 44 umgibt weiterhin das Ansatzelement 14, das mit der Hülse 10, insbesondere einstückig, ausgebildet ist. Das erste Material 40 umgibt die Hülse 10 jedoch nicht vollständig. Vielmehr ist die Hülse 10 nur in einem oberen Bereich von diesem Material bedeckt, wobei ausgehend von einer Unterseite 50 sich das Material 44 ohne Unterbrechung bis hin zu einer Oberseite 52 erstreckt. Die Oberseite 52 weist in Fahrtrichtung 17.

Das zweite Material 46 umschließt entsprechend der ersten Ausführungsform den Bereich des Abstützelements 14. Zusätzlich umschließt das Material 56 die Hülse auf einer Unterseite 54. Insbesondere umschließt das Material 56 den Bereich der Hülse 10, in dem das Material 44 nicht vorgesehen ist. In einem oberen Bereich 58, in dem der Handballen und zumindest teilweise die Handfläche des Benutzers aufliegt und in dem große Kräfte auftreten, ist ferner das weichere Material 46 vorgesehen.

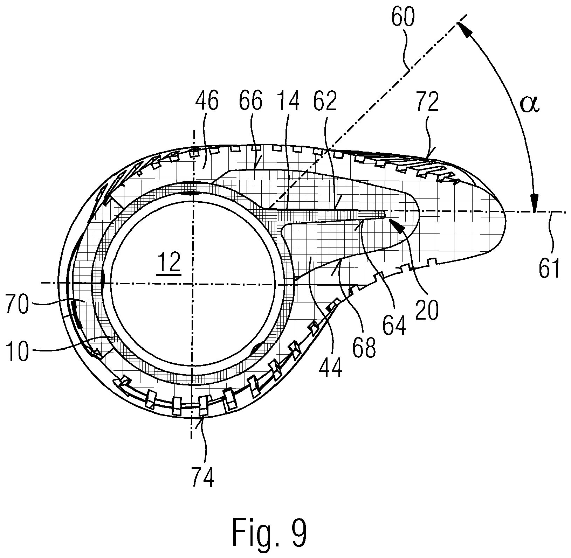

Figur 9 zeigt eine alternative Ausführungsform, wobei ähnliche und identische Bauteile mit denselben Bezugszeichen gekennzeichnet sind. Die innenliegende Hülse 10 ist ebenfalls mit einem Ansatzelement 14 verbunden, bzw. einstückig ausgebildet. Allerdings ist das Ansatzelement 14 nicht wie bei dem in Figur 8 dargestellten Ausführungsform in radialer Richtung zur zylindrischen Hülse 12 angeordnet, sondern weist einen Winkel auf. Hierbei weist eine Oberseite des Ansatzelements 14 zu einer Radialen 60 einen Winkel α auf. Der Winkel α liegt in bevorzugter Ausführungsform im Bereich von 30° bis 60°, insbesondere 40° bis 50°.

Das Ansatzelement 14 ist von dem ersten Material 44 umgeben. Auf einer Oberseite 62 des Ansatzelements 14 weist das erste Material 44 eine Dicke von insbesondere mindestens 2 mm, insbesondere mindestens 4 mm auf, wobei die Dicke insbesondere <6 mm ist. Auch im Bereich der Vorderkante 20 ist die Dicke im dargestellten Ausführungsbeispiel größer 2 mm, insbesondere größer 4 mm. Dies gilt im dargestellten Ausführungsbeispiel auch für den Bereich des ersten Materials 44 an einer Unterseite 64 des Ansatzelements 14.

Das zweite Material 46 überdeckt im dargestellten Ausführungsbeispiel im Bereich des Handballen-Abstützelements 48 das Ansatzelement 14 sowie auch das erste Material 44. Auf einer Oberseite 66 des ersten Materials 44, auf einer Unterseite 68 des Materials 44 und auch im Bereich der Vorderkante 20 des Materials 44 weist das zweite Material 46 eine Dicke von vorzugsweise mehr als 2mm, insbesondere mehr als 4mm auf.

Dem Ansatzelement 14 bzw. dem Handballen-Abstützelement 48 gegenüberliegend ist im dargestellten Ausführungsbeispiel ein weiteres Material 70 vorgesehen. Dies erstreckt sich vollständig oder teilweise über die Länge des Fahrradgriffs. Bei dem Material 70 kann es sich um eine dritte Materialkomponente und in bevorzugter Ausführungsform um das erste Material handeln.

Des Weiteren ist aus dem in Figur 9 dargestellten Ausführungsbeispiel ersichtlich, dass eine Oberseite 72 sowie eine Unterseite 74 des zweiten Materials 46 mehrere jeweils parallel zueinander verlaufende Rillen aufweist, so dass eine Oberflächentextur geschaffen ist. Die Oberflächentextur kann auch anders ausgestaltet sein. Insbesondere können auch anders ausgebildete Ausnehmungen und/oder Erhebungen zur Ausbildung einer Textur an der Oberseite 72 und/oder der Unterseite 74 vorgesehen sein.

Wesentlich ist das in beiden Ausführungsformen im Bereich des Ansatzelements 14 zwei Materiallagen vorgesehen sind.

## Patentansprüche

1. Fahrradgriff mit
einer Hülse (10),
einem mit der Hülse (10) verbundenen flügelförmigen Ansatzelement (14),
einem die Hülse (10) und das Ansatzelement (14) umgebenden Griffelement (42) und
einem zumindest durch das Ansatzelement (14) und das im Bereich des Ansatzelements (14) angeordneten Griffelement (42) ausgebildeten Handballen-Abstützelement (48),
wobei das Griffelement (42) zumindest zwei unterschiedliche Materialien aufweist, wobei das Griffelement (42) im Bereich des Ansatzelements (14), zur Ausbildung des Handballen-Abstützelements (48) mehrlagig, insbesondere zweilagig ausgebildet ist,
wobei das Ansatzelement (14) von einer aus dem ersten Material (44) ausgebildeten inneren Materiallage (44) vollständig bedeckt ist und **dadurch gekennzeichnet, dass** eine äußere Materiallage (46) die innere Materiallage (44) im Bereich des Ansatzelements (14) umschließt.

2. Fahrradgriff nach Anspruch 1, **dadurch gekennzeichnet, dass** mindestens zwei der Materiallagen (44, 46) Kunststoff aufweisen, insbesondere aus Kunststoff hergestellt sind.

3. Fahrradgriff nach Anspruch 1 oder 2, **dadurch gekennzeichnet, dass** das erste Material (44) auf einer Oberseite (62) und/oder einer Unterseite (64) und/oder einer Vorderkante (20) des Ansatzelements (14) eine Dicke von mindestens 2 mm und besonders bevorzugt mindestens 4 mm aufweist.

4. Fahrradgriff nach einem der Ansprüche 1 bis 3, **dadurch gekennzeichnet, dass** das zweite Material (46) auf einer Oberseite (66) und/oder einer Unterseite (68) und/oder einer Vorderkante (40) des ersten Materials eine Dicke von mindestens 2 mm, insbesondere mindestens 4 mm aufweist, wobei die Dicke im Bereich der Vorderkante (20) vorzugsweise mindestens 5, insbesondere mindestens 8 mm beträgt.

5. Fahrradgriff nach einem der Ansprüche 1 bis 4, **dadurch gekennzeichnet, dass** sich das Ansatzelement (14) ausgehend von der Hülse (10) insbesondere kontinuierlich verjüngt.

6. Fahrradgriff nach Anspruch 5, **dadurch gekennzeichnet, dass** das Ansatzelement (14) eine Dicke von 1 mm bis 3 mm, insbesondere 1,5 mm bis 3 mm aufweist und/oder die Hülse (10) eine Dicke von 0,8 mm bis 3 mm, insbesondere 1 bis 2 mm aufweist.

7. Fahrradgriff nach Anspruch 1 bis 6, **dadurch gekennzeichnet, dass** das Ansatzelement (14) mehrteilig ausgebildet ist, wobei die einzelnen Teile des Ansatzelement (14) vorzugsweise nebeneinander angeordnet sind.

8. Fahrradgriff nach einem der Ansprüche 1 bis 7, **dadurch gekennzeichnet, dass** eine Mittellinie oder Oberseite (61) des Ansatzelements (14) oder zumindest eines der Teile der Ansatzelemente zu einer Radialen (60) der Hülse (10) einen Winkel von 30° bis 60°, vorzugsweise 40° bis 50° aufweist.

9. Fahrradgriff nach Anspruch 1 bis 8, **dadurch gekennzeichnet, dass** die mindestens zwei Materialien (44), (46) eine unterschiedliche Härte aufweisen, wobei vorzugsweise das zweite Material (46) weicher als das erste Material (44) ist.

10. Fahrradgriff nach Anspruch 1 bis 9, **dadurch gekennzeichnet, dass** die Hülse (10) aus einem Material hergestellt ist, das härter als die Materialien (44, 46) des Griffelements (42) ist und/oder dass die Hülse (10) Polypropylen (PP) aufweist, insbesondere aus Polypropylen (PP) hergestellt ist.

11. Fahrradgriff nach Anspruch 1 bis 10, **dadurch gekennzeichnet, dass** die Hülse (10) bzw. das Hülsenmaterial ein E-Modul von 1500 bis 3000 MPa aufweist.

12. Fahrradgriff nach Anspruch 1 bis 11, **dadurch gekennzeichnet, dass** das erste und/oder das zweite Material TPE (thermoplastisches Elastomer) aufweist, insbesondere aus TPE (thermoplastisches Elastomer) hergestellt ist.

13. Fahrradgriff nach Anspruch 1 bis 12, **dadurch gekennzeichnet, dass** das erste Material eine Härte von 35 Shore-A bis 80 Shore-A, insbesondere 40 Shore-bis 70 Shore-A aufweist und/oder das zweite Material eine Härte von 20 Shore-A bis 35 Shore-A, insbesondere 25 Shore-A bis 30 Shore-A aufweist.

14. Fahrradgriff nach Anspruch 1 bis 13, **dadurch gekennzeichnet, dass** die Hülse (10) in einem vorzugsweise an einer Außenseite und/oder Innenseite vorgesehenen Klemmbereich (30) aufweist, an dem insbesondere ein Klemmelement (34) angeordnet ist., wobei vorzugsweise die Hülse (10) im Klemmbereich (30) vorzugsweise zumindest einen Klemmschlitz (32) aufweist.

## Claims

1. Bicycle handle comprising
a sleeve (10),
a wing-shaped protrusion element (14) connected with the sleeve (10),
a handle element (42) surrounding the sleeve (10) and the protrusion element (14), and
a support element (48) for the heel of the hand formed at least by the protrusion element (14) and the handle element (42) arranged in the region of the protrusion element (14),
the handle element (42) comprising at least two different materials, wherein the handle element (42) is multi-layered, in particular two-layered, in the region of the protrusion element (14), to form the support element (48) for the heel of the hand, wherein the protrusion element (14) is covered completely by an inner material layer(44) formed by the first material (44), and
**characterized in that**
an outer material layer (46) surrounds the inner material layer (44) in the region of the protrusion element (14).

2. Bicycle handle of claim 1, **characterized in that** at least two of the material layers (44, 46) comprise plastic material or, in particular, are made of plastic material.

3. Bicycle handle of claim 1 or 2, **characterized in that** the first material (44) on an upper side (62) and/or a lower side (64) and/or a front edge (20) of the protrusion element (14) has a thickness of at least 2 mm and particularly preferred at least 4 mm.

4. Bicycle handle of claim 3, **characterized in that** the second material (46) on an upper side (66) and/or a lower side (68) and/or a front edge (40) of the first material (44) has a thickness of at least 2 mm, in particular at least 4 mm, the thickness in the region of the front edge (20) preferably being at least 5 mm, in particular at least 8 mm.

5. Bicycle handle of claim 4, **characterized in that** the protrusion element (14) tapers in particular continuously, starting from the sleeve (10).

6. Bicycle of one of claims 1 to 4, **characterized in that** the protrusion element (14) has a thickness of 1 mm to 3 mm, in particular 1.5 mm to 3 mm, and/or the sleeve (10) has a thickness of 0.8 mm to 3 mm, in particular 1 to 2 mm.

7. Bicycle handle of one of claims 1 to 6, **characterized in that** the protrusion element (14) is of a multi-part design, the individual parts of the protrusion element (14) preferably being arranged side by side.

8. Bicycle handle of one of claims 1 to 7, **characterized in that** a center line or upper side (61) of the protrusion element (14) or at least one of the parts of the protrusion elements is arranged at an angle from 30° to 60°, preferably 40° to 50°, with respect to a radial plane (60) of the sleeve (10).

9. Bicycle handle of one of claims 1 to 8, **characterized in that** the at least two materials (44), (46) differ in hardness, wherein it is preferred that the second material (46) is softer than the first material (44).

10. Bicycle handle of one of claims 1 to 9 **characterized in that** the sleeve (10) is made of a material that is harder than the materials (44, 46) of the handle element (42) and/or that the sleeve (10) comprises polypropylene (PP), in particular is made of polypropylene (PP)..

11. Bicycle handle of one of claims 1 to 10, **characterized in that** the sleeve (10) or the sleeve material has an I-module of 1500 to 3000 MPa.

12. Bicycle handle of one of claims 1 to 11, **characterized in that** the first material and/or the second material comprises TPE (thermoplastic elastomer), in particular is made of TPE (thermoplastic elastomer).

13. Bicycle handle of one of claims 1 to 12, **characterized in that** the first material has a hardness of 35 Shore A to 80 Shore A, in particular 40 Shore A to 70 Shore A and/or the second material has a hardness of 20 Shore A to 35 Shore A, in particular 25 Shore A to 30 Shore A.

14. Bicycle handle of one of claims 1 to 13, **characterized in that** the sleeve (10) comprises a clamping region (30) preferably provided on an outer side and/or an inner side, at which clamping region in particular a clamping element (34) is arranged, the sleeve (10) preferably comprising at least one clamping slit (32) in the clamping region (30).

## Revendications

1. Poignée de bicyclette dotée
d'une douille (10),
d'un élément d'appendice en forme d'aile (14) relié à la douille (10),
d'un élément de poignée (42) entourant la douille (10) et l'élément d'appendice (14) et
d'un élément de support de paume (48) réalisé au moins par l'élément d'appendice (14) et l'élément de poignée (42) disposé dans la zone de l'élément d'appendice (14),
dans laquelle l'élément de poignée (42) comporte au moins deux matières différentes, dans laquelle l'élément de poignée (42) est réalisé dans la zone de l'élément d'appendice (14) comme multicouche, en particulier bicouche, pour réaliser l'élément de support de paume (48),
dans laquelle l'élément d'appendice (14) est entièrement recouvert par une couche intérieure de matière formée de la première matière (44) et **caractérisée en ce qu'**une couche extérieure de matière (46) entoure la couche intérieure de matière (44) dans la zone de l'élément d'appendice (14).

2. Poignée de bicyclette selon la revendication 1, **caractérisée en ce qu'**au moins deux des couches de matière (44, 46) comportent du plastique, en particulier sont fabriquées en plastique.

3. Poignée de bicyclette selon la revendication 1 ou 2, **caractérisée en ce que** la première matière (44) comporte sur une face supérieure (62) et/ou une face inférieure (64) et/ou un bord avant (20) de l'élément d'appendice (14) une épaisseur d'au moins 2 mm et tout particulièrement d'au moins 4 mm.

4. Poignée de bicyclette selon l'une des revendications 1 à 3, **caractérisée en ce que** la première matière (46) comporte sur une face supérieure (66) et/ou une face inférieure (68) et/ou un bord avant (40) de la première matière une épaisseur d'au moins 2 mm et tout particulièrement d'au moins 4 mm, dans laquelle l'épaisseur dans la zone du bord avant (20) est de préférence d'au moins 5, en particulier d'au moins 8 mm.

5. Poignée de bicyclette selon l'une des revendications 1 à 4, **caractérisée en ce que** l'élément d'appendice (14) se rétrécit à partir de la douille (10), en particulier de façon continue.

6. Poignée de bicyclette selon la revendication 5, **caractérisée en ce que** l'élément d'appendice (14) comporte une épaisseur de 1 mm à 3 mm, en particulier de 1,5 mm à 3 mm et/ou la douille (10) comporte une épaisseur de 0,8 mm à 3 mm, en particulier de 1 à 2 mm.

7. Poignée de bicyclette selon l'une des revendications 1 à 6, **caractérisée en ce que** l'élément d'appendice (14) est réalisé en plusieurs pièces, dans laquelle les pièces individuelles de l'élément d'appendice (14) sont de préférence disposées l'une à côté de l'autre.

8. Poignée de bicyclette selon l'une des revendications 1 à 7, **caractérisée en ce qu'**une ligne médiane ou une face supérieure (61) de l'élément d'appendice (14) ou au moins une des pièces de l'élément d'appendice comporte un angle de 30° à 60°, de préférence de 40° à 50°, par rapport à une radiale (60) de la douille (10) .

9. Poignée de bicyclette selon l'une des revendications 1 à 8, **caractérisée en ce que** les aux moins deux matières (44, 46) comportent une dureté différente, dans laquelle la deuxième matière (46) est de préférence plus molle que la première matière (44).

10. Poignée de bicyclette selon l'une des revendications 1 à 9, **caractérisée en ce que** la douille (10) est fabriquée en une matière plus dure que les matières (44, 46) de l'élément de poignée (42) et/ou **en ce que** la douille (10) comporte du polypropylène (PP), en particulier est fabriquée en polypropylène (PP).

11. Poignée de bicyclette selon l'une des revendications 1 à 10, **caractérisée en ce que** la douille (10) ou la matière de la douille comporte un module d'élasticité de 1500 à 3000 MPa.

12. Poignée de bicyclette selon l'une des revendications 1 à 11, **caractérisée en ce que** la première matière et/ou la deuxième matière comporte un ETP (élastomère thermoplastique), en particulier est fabriquée en ETP (élastomère thermoplastique).

13. Poignée de bicyclette selon l'une des revendications 1 à 12, **caractérisée en ce que** la première matière comporte une dureté Shore de 35A à 80A, en particulier de 40A à 70A et/ou la deuxième matière comporte une dureté Shore de 20A à 35A, en particulier de 25A à 30A.

14. Poignée de bicyclette selon l'une des revendications 1 à 13, **caractérisée en ce que** la douille (10) comporte une zone de serrage (30) prévue de préférence sur une face externe et/ou une face interne, un élément de serrage (34) étant en particulier disposé sur celle-ci, dans laquelle la douille (10) comporte de préférence dans la zone de serrage (30) de préférence au moins une fente de serrage (32).
